# EUROPÄISCHE PATENTSCHRIFT

(11) **EP 2 794 111 B1**
(45) Veröffentlichungstag und Bekanntmachung des Hinweises auf die Patenterteilung: **06.11.2019**
(21) Anmeldenummer: 12808358.1
(22) Anmeldetag: 17.12.2012
(51) Int. Cl.: B02C 23/06, B02C 19/00, C03B 37/16

(54) **VERFAHREN ZUR AUFARBEITUNG VON GLASFASERABFALL**
METHOD FOR PROCESSING FIBRE GLASS WASTE
PROCÉDÉ DE PRÉPARATION DE DÉCHETS DE FIBRES DE VERRE

(30) Priorität: 19.12.2011 EP 11194310
(43) Veröffentlichungstag der Anmeldung: 29.10.2014
(73) Patentinhaber: Quarzwerke GmbH, 50226 Frechen (DE)
(72) Erfinder: RIESS, Michael, 50169 Kerpen (DE); ZILLES, Jörg Ulrich, 50677 Köln (DE); PANIC, Nicola, 50169 Kerpen (DE)
(74) Vertreter: dompatent von Kreisler Selting Werner - Partnerschaft von Patent- und Rechtsanwälten mbB
(86) Internationale Anmeldenummer: PCT/EP2012/075744
(87) Internationale Veröffentlichungsnummer: WO 2013/092471

(56) Entgegenhaltungen:
- WO-A1-03/002480
- US-A- 6 029 477
- US-A- 6 032 883
- US-A1- 2007 042 890

## Beschreibung

Die vorliegende Erfindung betrifft ein Verfahren zum Zerkleinern von Glasfasern aus Glasfaserabfällen sowie die Verwendung eines Additivs als Zuschlagmittel in einer Mahlkörpermühle zum Zerkleinern von Glasfasern.

Bei einem typischen Produktionsprozess von Glasfasern entstehen in allen durchgeführten Produktionsschritten erhebliche Mengen an Glasfaserabfällen. Diese Glasfaserabfälle bestehen hauptsächlich aus langen Fasern, die üblicherweise Längen im Bereich von 5 bis 10 m aufweisen. Um diese Glasfaserabfälle wieder dem Produktionsprozess zuführen zu können und somit die Wirtschaftlichkeit des Prozesses zu verbessern, ist es wünschenswert, die Fasern auf eine für den Produktionsprozess geeignete Ziellänge zu zerkleinern.

US 2007/0042890 beschreibt ein Verfahren, bei dem Fasern zunächst grob geschnitten und dann in einer Kugelmühle gemahlen werden.

US 6,032,883 beschreibt ein Verfahren zum Verarbeiten von Glasfasern, bei dem Glasfasern zusammen mit kleinen Mengen an Glaspulver, Glasbruch oder Wasser vermischt werden.

WO 03/002 480 A1 beschreibt ein Verfahren zur Herstellung von Keramikprodukten unter Verwendung von Glasfaserabfällen.

Bei der Aufbereitung solcher Glasfasern hat sich bei experimentellen Vorversuchen gezeigt, dass eine direkte Zerkleinerung auf die geeignete Ziellänge mittels geeigneter Schneidwerkzeuge sich stark verschleißend auf diese Werkzeuge auswirkt. Durch den dabei erzeugten Abrieb an den Werkzeugen werden zudem die Glasfasern verunreinigt.

Ferner hat sich bei Mahlversuchen der Fasern gezeigt, dass diese grundsätzlich zur Verpelzung neigen. Hierbei entstehen wollartige Verklumpungen der Glasfasern, die die Mahlleistung einer Mühle stark herabsetzen, so dass eine Zerkleinerung des Mahlgutes bzw. der Glasfasern nicht mehr effektiv möglich ist.

Aufgabe der Erfindung war es deshalb, ein Verfahren bereitzustellen, das eine Wiederverwendung von Glasfaserabfällen erlaubt.

Diese Aufgabe wird erfindungsgemäß mit einem Verfahren zum Zerkleinern von Glasfasern aus Glasfaserabfällen gemäß Anspruch 1gelöst.

Durch das Verfahren wird ein glasfaserhaltiges Gemisch erhalten.

Im Gegensatz zur oben genannten US 2007/0042890 wird ein Additiv verwendet, das im Material verbleibt, während US 2007/0042890 A1 Mahlkugeln mit einem Durchmesser von 3 bis 9 mm verwendet, die wieder in den Mahlprozess zurückführt werden. Typischerweise befinden sich in einer Mühle, wie sie in dem Dokument beschrieben ist, 50% Mahlkugeln und 50% Mahlgut. Bei einer Dichte des Aluminiumoxid von 3,96 g/cm³ und einer Glasfaserdichte von 0,7 bis 0,9 g/cm³ ergeben sich Massenverhältnisse von etwa 20:80 (Glasfasern: Al₂O₃ Mahlkugeln).

Die oben genannte US 6,032,883 verwendet als Trägermaterialien unter anderem Glaspulver. Die Mengen an Glaspulver betragen 1:10 bis 1:40 (Glaspulver: Glasfasern).

Die erfindungsgemäß eingesetzten Glasfasern können sowohl beschichtete als auch nicht beschichtete Glasfasern sein. Beschichtete Glasfasern sind beispielsweise Glasfasern, die eine Aminosilanbeschichtung aufweisen.

Wenn die Glasfaserabfälle eine hohe Restfeuchte, z.B. von ≥ 6 Gew.-% aufweisen, kann, vorzugsweise nach dem Grobzerkleinern der Glasfasern und vor dem Verfahrensschritt des Feinzerkleinerns der grobzerkleinerten Glasfasern, ein Trockenschritt durchgeführt werden. Geeignete Trocknungsvorrichtungen sind dem Fachmann aus dem Stand der Technik bekannt. So können beispielsweise die grobzerkleinerten Glasfasern mit einem temperierten Luftgebläse getrocknet werden.

Die Glasfaserabfälle, welche bei der Glasfaserproduktion anfallen, werden in einem ersten Schritt, Schritt a), mittels geeigneter Schneidvorrichtungen grobzerkleinert. Typischerweise wird hierbei ein loses Haufwerk der Glasfaserabfälle, beispielsweise aus einem Container mit Glasfaserabfällen, unkontrolliert auf die geeignete Schneidvorrichtung aufgegeben. Alternativ können die Glasfaserabfälle auch von einer Spule abgewickelt oder direkt aus der Glasschmelze gezogen werden und der Schneidvorrichtung zugeführt werden.

Das vorliegende Verfahren eignet sich besonders für sogenannte Wirrfasern, also Knäueln von Glasfasern ohne eine spezielle Ausrichtung.

Gemäß einer bevorzugten Ausführungsform erfolgt das Grobzerkleinern mittels einer Schneidmühle, einer Guillotine-Schneidmaschine, eines Reibrads einer Zahnwalzenmühle, einer Hammermühle, einer Stiftmühle oder einer Prallmühle. Derartige Vorrichtungen sind dem Fachmann aus dem Stand der Technik bekannt. Reibräder sind auch unter der Bezeichnung Reibungs- oder Friktionsräder bekannt. In einigen Fällen ist es sinnvoll, zwei oder mehr Grobzerkleinerungsverfahren nacheinander durchzuführen.

In Ausführungsformen, in denen zwei Großzerkleinerungsverfahren verwendet werden, kann es sinnvoll sein, im ersten Schritt nur auf Fasergrößen von 10 bis 100 cm zu zerkleinern und anschließend ein oder mehr Durchgänge für die weitere Grobzerkleinerung vorzunehmen.

Vorzugsweise werden bei dem Verfahrensschritt a) grobzerkleinerte Glasfasern mit einer mittleren Länge von 5 bis 50 mm, bevorzugt 5 bis 35 mm, mehr bevorzugt 10 bis 20 mm erhalten. Die genaue Größe hängt von der Art der verwendeten Grobzerkleinerungsvorrichtung ab. Eine Guillotine-Schneidmaschine gibt sehr gleichmäßige Längen, während Reibräder oder Zahnwalzenmühlen ungleichmäßigere Längen ergeben. Durch die Grobzerkleinerung wird eine Verpelzung in dem nachfolgenden Verfahrensschritt des Feinzerkleinerns reduziert.

Vorzugsweise weisen die grobzerkleinerten Glasfasern eine Restfeuchte von < 5 Gew.-%, bevorzugt < 2,5 Gew.-%, mehr bevorzugt < 1,5 Gew.-% auf. So hat sich gezeigt, dass eine Mischung aus grobzerkleinerten Glasfasern und Additiv in der Mahlkörpermühle, wobei die Glasfasern noch eine Restfeuchte von mehr als 5 Gew.-% aufweisen, zum Verpelzen und damit zur Herabsetzung der Feinzerkleinerungsgeschwindigkeit führt. Der Feuchtigkeitsgehalt, der zur Herabsetzung der Feinzerkleinerungsgeschwindigkeit führt, hängt von der Art der Vorrichtung ab.

Die grobzerkleinerten Glasfasern werden in einem zweiten Verfahrensschritt, Schritt b), mit einem geeigneten körnigen Additiv mit einem d50-Wert im Bereich von 0,1 - 5,0 mm als Zuschlagmittel vermischt. Ein d50-Wert im Bereich von 0,1 bis 2,0 mm ist besonders bevorzugt. Das auf diese Weise erhaltene Glasfaser/Additiv-Gemisch wird sodann für eine Zeit einer mechanischen Krafteinwirkung ausgesetzt. Hierdurch wird ein Gemisch von feinzerkleinerten Glasfasern und Additiv erhalten, die einer Schmelze wieder zugeführt werden können.

Erfindungsgemäß verbleibt also das zugesetzte Additiv in den feinzerkleinerten Glasfasern und wird gemeinsam in einen Produktionsprozess eingeführt. Das Additiv wird im Regelfall dabei ebenfalls zerkleinert.

Körnige Additive sind erfindungsgemäß solche, die unter Normalbedingungen in einem festen Aggregatzustand vorliegen und bevorzugt aus im Wesentlichen kugelförmigen Partikeln bestehen.

Vorzugsweise weist die Oberfläche des körnigen Additivs scharfe Kanten auf, d.h. dass - in der Querschnittansicht - mindestens zwei Schenkel des körnigen Additivs spitzförmig zulaufen.

Das Additiv ist ausgewählt aus der Gruppe Quarzsand, Kalk, Branntkalk, Dolomit, gebrannter Dolomit, Hochofenschlacke, Al₂O₃, Aluminiumhydroxid, Natriumfeldspat, Kaliumfeldspat, Calciumfeldspat, Borsäure, Boroxid, Alkali- und Erdalkaliborate und Mischungen davon. Somit kann je nach Schmelze, für das die Glasfaser erfindungsgemäß aufbereitet wird, das passende Additiv als Zuschlagmittel für das Feinzerkleinern der grobzerkleinerten Glasfasern verwendet werden.

Ergänzend können auch weitere dem Fachmann bekannte Inhaltsstoffe, die bei der Glasherstellung zum Einsatz kommen, als Additiv eingesetzt werden. Dem Fachmann bekannt sind Natriumcarbonat, Pottasche, Feldspat oder Altglas, vorzugsweise sog. Produktionsbruch. Auch diese Additive müssen körnig sein.

Die Verwendung von Al₂O₃ und Altglas ist weniger bevorzugt. Insbesondere der Einsatz von Altgläsern kann aufgrund des hohen Natriumanteils aus üblichem Glasbruch zu unerwünscht hohen Natriumanteilen führen.

In einer besonders bevorzugten Ausführungsform werden Additive mit einem d50-Wert im Bereich von 0,1 bis 2 mm oder 0,1 bis 1,5 mm, bevorzugt im Bereich von 0,3 bis 1,0 mm verwendet. Hierbei hat sich gezeigt, dass ein Additiv mit einem größeren d50-Wert (siehe Beispiel 2) die grobzerkleinerten Glasfasern besser in Stücke geeigneter Größe zerkleinert. Es wird vermutet, dass ein Additiv mit größerem d50-Wert beispielsweise das Mahlgut durch den Druck der Mahlkörper in der Mühle zerreibt.

d50 bedeutet die Partikelgröße, bei der 50 Gew.-% der Partikel eine Partikelgröße kleiner als der d50-Wert und 50 Gew.-% eine Partikelgröße größer als der d50-wert aufweisen. Solche Werte werden typischerweise aus Sieblinien abgeleitet.

Generell hat sich gezeigt, dass der kleinstmögliche d50-Wert des Additivs von der Härte des Additivs abhängt. Experimentelle Versuche belegen, dass je kleiner die Mohshärte des Additivs ist, desto größer der d50-Wert des Additivs sein muss, um die grobzerkleinerten Glasfaser optimal zu zerkleinern. Je größer der d50-Wert des Additivs somit ist, desto länger ist die Mahldauer des zweiten Verfahrensschrittes, also des Schrittes b).

Gemäß einer weiteren bevorzugten Ausgestaltung erfolgt das Feinzerkleinern in einer Mühle. Das in die Mühle aufgegebene Glasfaser/Additiv-Gemisch wird über eine definierte Mahldauer feinzerkleinert.

Grundsätzlich sind alle dem Fachmann bekannten Mühlen geeignet.

Vorzugsweise erfolgt das Feinzerkleinern in einer Mahlkörpermühle. Geeignete Mahlkörpermühlen sind vorzugsweise eine Kugelmühle, eine Sturzmühle, eine Trommelmühle oder eine Rohrmühle. Die Mahlkörper werden im Gegensatz zum Additiv nach dem Mahlen entfernt.

Geeignete Mischungsverhältnisse von Glasfasern zum Additiv betragen vorzugsweise 30/70 Gew.-% oder mehr oder 40/60 oder mehr, oder 45/55 Gew.-% oder mehr. Die Obergrenze liegt bei 95/05 oder 80/20 Gew.-%, bevorzugt bei 70/30, 60/40 oder 55/45. 30/70 bis 80/20 Gew.-% ist besonders bevorzugt.

Unterschiedliche Mischungsverhältnisse wirken sich auf die Mahldauer und das gemäß dem Verfahren erzeugte Produkt aus.

Vorzugsweise werden im Schritt b) feinzerkleinerte Glasfasern mit einer Länge von < 2mm, bevorzugt < 1 mm erhalten. Eine Feinzerkleinerung unter 0,1 mm ist im Regelfall nicht notwendig.

In einer besonderen Ausführungsform wird das Gemisch aus feinzerkleinerten Glasfasern und Additiv einer Sichtung unterzogen. Geeignete Sichter sind dem Fachmann aus dem Stand der Technik bekannt.

Wird eine Sichtung durchgeführt, so kann das abgetrennte Überkorn rückgeführt werden, um die Ausbeute des Feinkorns zu erhöhen.

Grundsätzlich stellt sich durch die Rückführung im Prozess ein Stoff-Strom-Gleichgewicht ein. Die Zuführungsgeschwindigkeit, mit dem grobzerkleinerte Fasern und Additive in den Prozess eingebracht werden, bestimmt die Verweildauern. Wird zu viel Material in den Prozess geführt, wird das Produkt grobkörniger und es verschlechtert sich die Trennschärfe des Sichters. Im Extremfall kann es dabei zu Verstopfungen kommen.

Wird eine Mahlkörpermühle verwendet, ist eine weitere Regelgröße der Füllstand der Mühle mit Mahlkugeln; mehr Mahlkugeln erhöhen die Mahlintensität. Die Abtrennung im Windsichter kann durch die Umdrehungsgeschwindigkeit der eingesetzten Ventilatoren bestimmt werden. Typischerweise verläuft die Trennung durch zwei gegenläufige oder orthogonal verlaufende Luftströme. Die Umdrehungsgeschwindigkeiten bestimmen die Trennkorngröße.

Alternativ kann das Gemisch von feinzerkleinerten Glasfasern und Additiv vor der Sichtung durch ein Sieb mit einer Maschenweite im Bereich von < 2,5 bis 0,5 mm, mehr bevorzugt im Bereich von < 2 bis 1 mm gesiebt werden, um größere Fragmente zu entfernen.

Gegenstand der vorliegenden Erfindung ist auch die Verwendung eines Additivs ausgewählt aus der Gruppe Quarzsand, Kalk, Branntkalk, Dolomit, gebrannter Dolomit, Hochofenschlacke, Al₂O₃, Aluminiumhydroxid, Natriumfeldspat, Kaliumfeldspat, Calciumfeldspat, Borsäure, Boroxid, Alkali- und Erdalkaliborate und Mischungen davon als Zuschlagmittel in einem Verhältnis von 25/75 bis 95/05 Gew.-% (Glasfasern:Additiv) zum Zerkleinern von Glasfasern.

Ein weiterer Gegenstand der vorliegenden Erfindung sind die Glasfasern erhalten nach dem erfindungsgemäßen Verfahren, wobei das Mischungsverhältnis von Glasfasern zum Additiv bei 25/75 zu 70/30 liegt.

Da das Additiv im Feinzerkleinerungsschritt ebenfalls zerkleinert werden kann, hat das Additiv im Produkt eine kleinere Korngröße als die Ausgangsstoffe des Prozesses.

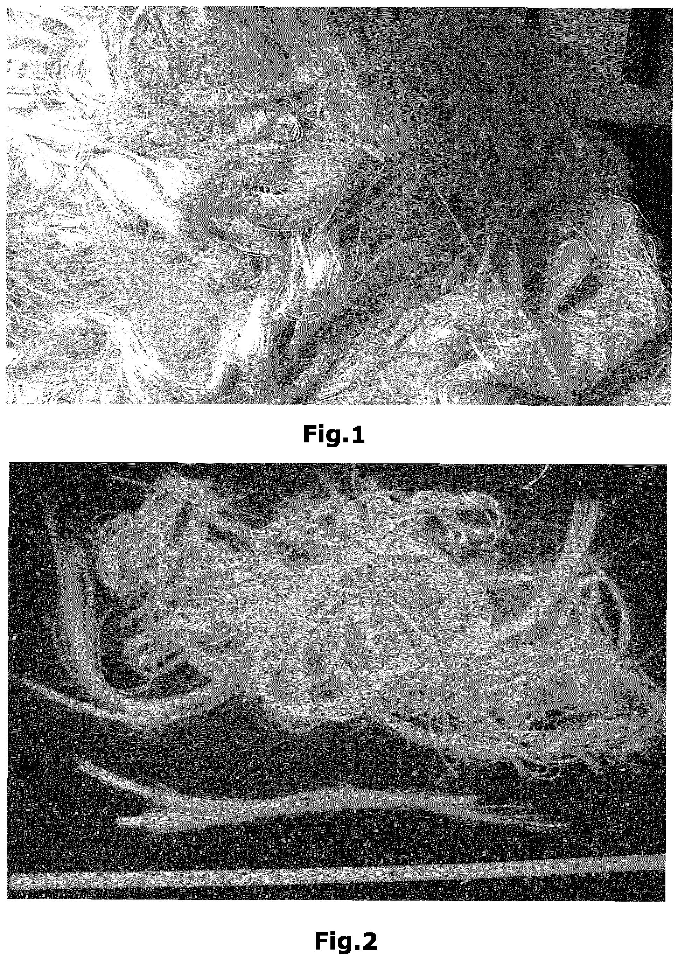

Figur 1 zeigt Glasfaser-Faserknäule, wie sie als Abfallmaterial erhalten werden.
Figur 2 zeigt eine Aufnahme von Fasern, die einem ersten Grobzerkleinerungsschritt unterzogen wurden. Diese weisen Längen im Bereich von etwa 20 bis 100 cm auf.

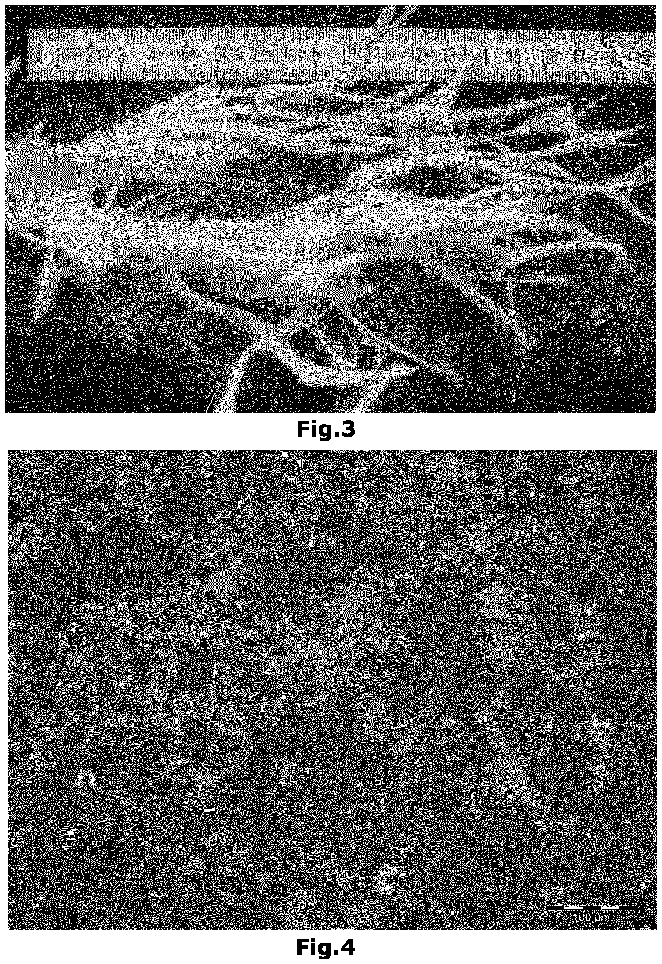

Figur 3 zeigt Fasern, die einem zweiten Grobzerkleinerungsschritt unterzogen wurden. Die Faserlänge beträgt etwa 0,5 bis 10 cm.
Figur 4 zeigt eine mikroskopische Aufnahme nach der Feinzerkleinerung. Neben dem Glasfasern ist auch das zermahlene Additiv Bestandteil des Materials.

### Beispiel 1

### Grobzerkleinern:

Glasfaserabfälle mit einer Länge im Bereich von 5 bis 10 m wurden mit einer Hochleistungs-Guillotine-Schneidmaschine auf eine Länge von 10 bis 20 mm grobzerkleinert. Der Fe₂O₃-Anteil ist hierbei unverändert geblieben.

### Feinzerkleinern:

Die grobzerkleinerten Glasfasern wurden mit einem Quarzsand (Provodiner Gießereisand PR30/31) in einer 20 kg Chargenkugelmühle feinzerkleinert.

| Versuch | Glasfaseranteil [%] | Mahldauer [min] | Aufgabe Menge [kg] | Faserlänge [mm] |
|---|---|---|---|---|
| 1. | 50 | 45 | 20 | 0,3 |
| 2. | 50 | 20 | 12 | 0,3 |
| 3. | 60 | 10 | 12 | <1,5 |
| 4. | 70 | 10 | 12 | <2 |

### Sichtung:

Die feinzerkleinerten Glasfasern und das Additiv wurden mit einem Sichter gesichtet. Es wurde eine Luftmenge von 165 l/min und eine Rotation des Sichtrades von 2000 U/min eingestellt. Das Massenverhältnis von Feingut zu Grobgut beim ersten Sichterdurchlauf betrug 1:7,5. Die erhaltene Faserlänge im Feingut betrug < 1 mm.

### Beispiel 2

Es wurden zwei Mahlversuche an einer 20 kg Chargenkugelmühle durchgeführt, wobei der vorliegende Mahlversuch mit Kaolin als Vergleichsbeispiel aufgeführt ist.

| | Kalk | Kaolin |
|---|---|---|
| Anteil Additiv [%] | 50 | 50 |
| Anteil Glasfaser [%] | 50 | 50 |
| Additiv -d50 | 1,8 mm | 2,4 µm |
| Körnung | 1,4 bis 2,5 mm | 35% < 2 µm |
| Beladung der Mühle [kg] | 12 | 12 |
| Mahldauer [min] | 10 | 10 |

Bei der Zugabe von Kaolin als Additiv zur Glasfaservermahlung wurde die Zerkleinerung der Glasfasern völlig unterbunden. Eine Durchmischung beider Komponenten konnte nicht erreicht werden. Die Glasfasern fügten sich über die Mahldauer zu Klumpen, welche äußerlich mit Kaolinmehl eingestaubt waren, aber innerlich ausschließlich Glasfasern enthielten.

Mit körnigem Kalk stellte sich ein Mahlerfolg über die Mahldauer ein. Hierbei konnten keine Faserknäuel im Mahlgut identifiziert werden. Die Faserlänge lag bei < 2 mm; das erhaltene Gemisch war als Ausgangsmaterial für die Glasherstellung gut geeignet.

### Beispiel 3

Es wurde ein kontinuierlicher Mahlversuch mit einer Kugelmühle mit einem Durchsatz von 100 kg/h vorgenommen.

Glasfaser und Additiv (Quarzsand gemäß Beispiel 1) wurden im Verhältnis 50/50 eingesetzt. Die Körnung des Additivs betrug 0,18 bis 1,4 mm, der d50-Wert betrug 0,55 mm; der Mahlkugelfüllstand betrug 40% des Mühlenvolumens. Das anschließende Sichten erfolgte mit einem Rotor bei 900 U/min und einem Ventilator von 800 U/min. Das Überkorn wurde zurückgeführt.

Das kontinuierlich entnommene Korn hatte eine Faserlänge < 500 µm, das Produkt hatte einen d50-Wert von 14,5 µm. Es ergaben sich folgende Siebrückstände:

| Siebgröße [µm] | Siebrückstand [%] |
|---|---|
| 160 | 0,25 |
| 125 | 0,8 |
| 100 | 2,0 |
| 63 | 9,2 |
| 40 | 20 |

## Patentansprüche

1. Verfahren zum Zerkleinern von Glasfasern aus Glasfaserabfällen umfassend die Verfahrensschritte:
a) Grobzerkleinern der Glasfasern, um grobzerkleinerte Glasfasern zu erhalten, und
b) Feinzerkleinern der grobzerkleinerten Glasfasern mit einem körnigen Additiv mit einem d50-Wert im Bereich von 0,1 bis 5,0 mm als Zuschlagmittel, um feinzerkleinerte Glasfasern zu erhalten, wobei das Mischungsverhältnis von Glasfasern zum Additiv 25/75 bis 95/05 Gew.-% beträgt;
wobei das Additiv ausgewählt ist aus der Gruppe Quarzsand, Kalk, Branntkalk, Dolomit, gebrannter Dolomit, Hochofenschlacke, Al₂O₃, Aluminiumhydroxid, Natriumfeldspat, Kaliumfeldspat, Calciumfeldspat, Borsäure, Boroxid, Alkali- und Erdalkaliborate und Mischungen davon.

2. Verfahren nach Anspruch 1, wobei das Grobzerkleinern 1, 2, 3 oder mehr Schritte umfasst.

3. Verfahren nach Anspruch 1 oder 2, wobei das Grobzerkleinern mittels einer Schneidmühle, einer Guillotine-Schneidmaschine, einem Reibrad, einer Zahnwalzenmühle, einer Hammermühle, einer Stiftmühle, einer Prallmühle oder einer Kombination der vorgenannten erfolgt.

4. Verfahren nach einem der Ansprüche 1 bis 3, wobei das Feinzerkleinern in einer Mühle erfolgt, insbesondere wobei die Mühle eine Mahlkörpermühle ist, insbesondere wobei die Mahlkörpermühle eine Kugelmühle, eine Sturzmühle, eine Trommelmühle oder eine Rohrmühle ist, und wobei die Mahlkörper anschließend abgetrennt werden.

5. Verfahren nach einem der Ansprüche 1 bis 4, wobei im Schritt a) grobzerkleinerte Glasfasern mit einer Länge von 5 bis 50 mm, bevorzugt 10 bis 20 mm erhalten werden.

6. Verfahren nach einem der Ansprüche 1 bis 5, wobei die grobzerkleinerten Glasfasern eine Restfeuchte von < 5 Gew.-%, bevorzugt < 2,5 Gew.-% aufweisen.

7. Verfahren nach einem der Ansprüche 1 bis 6, wobei im Schritt b) feinzerkleinerte Glasfasern mit einer Länge von < 2 mm, bevorzugt < 1 mm erhalten werden.

8. Verfahren nach einem der Ansprüche 1 bis 7, wobei das Gemisch aus feinzerkleinerten Glasfasern und Additiv einer Sichtung unterzogen werden.

9. Verfahren nach einem der Ansprüche 1 bis 8, wobei das Mischungsverhältnis von Glasfasern zum Additiv 30/70 bis 80/20 Gew.-%, bevorzugt 40/60 bis 70/30 Gew.-%, mehr bevorzugt 40/60 bis 60/40 Gew.-%, oder 45/55 bis 55/45 Gew.-% beträgt.

10. Verfahren nach einem der Ansprüche 1 bis 9, wobei Additive mit einem d50-Wert im Bereich von 0,1 bis 1,5 mm, bevorzugt 0,3 bis 1,0 mm verwendet werden.

11. Verwendung eines Additivs ausgewählt aus der Gruppe Quarzsand, Kalk, Branntkalk, Dolomit, gebrannter Dolomit, Hochofenschlacke, Al₂O₃, Aluminiumhydroxid, Natriumfeldspat, Kaliumfeldspat, Calciumfeldspat, Borsäure, Boroxid, Alkali- und Erdalkaliborate und Mischungen davon als Zuschlagmittel in einem Verhältnis von 25/75 bis 95/05 Gew.-%, bevorzugt 30/70 bis 80/20 Gew.-% von Glasfasern zum Additiv zum Zerkleinern von Glasfasern.

12. Glasfaserhaltiges Gemisch erhalten nach einem Verfahren gemäß einem der Ansprüche 1 bis 10, wobei das Mischungsverhältnis von Glasfasern zum Additiv bei 25/75 zu 70/30 liegt.

13. Glasfaserhaltiges Gemisch nach Anspruch 12 enthaltend:
- feinzerkleinerte Glasfasern mit einer Länge von < 2 mm,
- Additiv mit einem d50-Wert im Bereich von 5,0 µm bis 5,0 mm;
wobei das Additiv ausgewählt ist aus der Gruppe Quarzsand, Kalk, Branntkalk, Dolomit, gebrannter Dolomit, Hochofenschlacke, Al₂O₃, Aluminiumhydroxid, Natriumfeldspat, Kaliumfeldspat, Calciumfeldspat, Borsäure, Boroxid, Alkali- und Erdalkaliborate und Mischungen davon.

14. Glasfaserhaltiges Gemisch nach Anspruch 13, wobei das Additiv einen d50-Wert von 5,0 µm bis 2 mm aufweist.

15. Verwendung eines glasfaserhaltigen Gemisches erhalten durch das Verfahren nach einem der Ansprüche 1 bis 10 zur Herstellung von Glasfasern.

## Claims

1. A process for comminuting glass fibers from waste glass-based fibrous materials, comprising the process steps of
a) coarsely comminuting the glass fibers to obtain coarsely comminuted glass fibers; and
b) finely comminuting said coarsely comminuted glass fibers with a granular additive having a d50 value within a range of from 0.1 to 5.0 mm as an aggregate to obtain finely comminuted glass fibers, the mixing ratio of glass fibers to additive being from 25/75 to 95/05 % by weight;
wherein said additive is selected from the group of quartz sand, lime, burnt lime, dolomite, burnt dolomite, blast furnace slag, Al₂O₃, aluminum hydroxide, albite, orthoclase, anorthite, boric acid, boron oxide, alkali and alkaline earth borates, and mixtures thereof.

2. The process according to claim 1, wherein said coarsely grinding includes 1, 2, 3 or more steps.

3. The process according to claim 1 or 2, wherein said coarsely grinding is performed by means of a cutting mill, a guillotine cutter, an attrition wheel, a toothed roller mill, a hammermill, a pinned disk mill, an impact mill, or a combination of the above.

4. The process according to any of claims 1 to 3, wherein said finely grinding is performed in a mill, especially wherein said mill is a media mill, especially wherein said media mill is a ball mill, a tumbling mill, a drum mill, or a tube mill, and wherein the grinding media are subsequently separated out.

5. The process according to any of claims 1 to 4, wherein coarsely comminuted glass fibers having a length of 5 to 50 mm, preferably 10 to 20 mm, are obtained in process step a).

6. The process according to any of claims 1 to 5, wherein said coarsely comminuted glass fibers have a residual moisture content of < 5% by weight, preferably < 2.5% by weight.

7. The process according to any of claims 1 to 6, wherein finely comminuted glass fibers having a length of < 2 mm, preferably < 1 mm, are obtained in step b).

8. The process according to any of claims 1 to 7, wherein the mixture of finely comminuted glass fibers and additive is subjected to sifting.

9. The process according to any of claims 1 to 8, wherein the mixing ratio of glass fibers to the additive is 30/70 to 80/20 % by weight, preferably 40/60 to 70/30 % by weight, more preferably 40/60 to 60/40 % by weight, or 45/55 to 55/45 % by weight.

10. The process according to any of claims 1 to 9, wherein additives having a d50 value within a range of from 0.1 to 1.5 mm, preferably from 0.3 to 1.0 mm, are used.

11. Use of an additive selected from the group of quartz sand, lime, burnt lime, dolomite, burnt dolomite, blast furnace slag, Al₂O₃, aluminum hydroxide, albite, orthoclase, anorthite, boric acid, boron oxide, alkali and alkaline earth borates, and mixtures thereof as an aggregate at a ratio of 25/75 to 95/05 % by weight, preferably 30/70 to 80/20 % by weight of glass fibers to additive, for comminuting glass fibers.

12. A mixture containing glass fibers, obtained by a process according to any of claims 1 to 10, the mixing ratio of glass fibers to additive being from 25/75 to 70/30 % by weight .

13. A mixture containing glass fibers according to claim 12, comprising:
- finely comminuted glass fibers having a length of < 2 mm;
- an additive having a d50 value within a range of from 5.0 µm to 5.0 mm
wherein said additive is selected from the group of quartz sand, lime, burnt lime, dolomite, burnt dolomite, blast furnace slag, Al₂O₃, aluminum hydroxide, albite, orthoclase, anorthite, boric acid, boron oxide, alkali and alkaline earth borates, and mixtures thereof.

14. The mixture containing glass fibers according to claim 13, wherein said additive has a d50 value of from 5.0 µm to 2 mm.

15. Use of a mixture containing glass fibers obtained by a process according to any of claims 1 to 10 for preparing glass fibers.

## Revendications

1. Procédé de hachage de fibres de verres issues de déchets de fibre de verre, comprenant les étapes de procédé :
a) hachage grossier des fibres de verre, afin d'obtenir des fibres de verre grossièrement hachées, et
b) hachage fin des fibres de verre grossièrement hachées avec un additif granuleux avec une valeur D₅₀ dans un intervalle de 0,1 à 5,0 mm comme agent d'addition, afin d'obtenir des fibres de verre finement hachées, dans lequel le ratio des fibres de verre par rapport à l'additif vaut de 25/75 à 95/05 % (m/m) ;
dans lequel l'additif est sélectionné parmi le groupe formé par le sable quartzeux, le calcaire, la chaux calcinée, la dolomite, la dolomite calcinée, le laitier de haut-fourneau, Al₂O₃, l'hydroxyde d'aluminium, le feldspath sodique, le feldspath potassique, le feldspath calcique, l'acide borique, les oxydes de bore, les borates alcalins et alcalinoterreux, et les mélanges de ceux-ci.

2. Procédé selon la revendication 1, dans lequel le hachage grossier comprend 1, 2, 3 étapes ou plus.

3. Procédé selon la revendication 1 ou 2, dans lequel le hachage grossier s'effectue au moyen d'un broyeur à couteaux, d'une coupeuse guillotine, d'une roue de friction, d'un broyeur à rouleaux dentés, d'un broyeur à marteaux, d'un broyeur à barreaux, d'un broyeur à impact ou d'une combinaison des susnommés.

4. Procédé selon l'une des revendications 1 à 3, dans lequel le hachage fin s'effectue dans un broyeur, en particulier dans lequel le broyeur est un broyeur à milieux, en particulier dans lequel le broyeur à milieux est un broyeur à billes, un broyeur à cascade, un broyeur à tambour ou un broyeur tubulaire, et dans lequel les milieux sont ensuite séparés.

5. Procédé selon l'une des revendications 1 à 4, dans lequel dans l'étape a) les fibres de verre grossièrement hachées sont obtenues avec une longueur de 5 à 50 mm, de préférence de 10 à 20 mm.

6. Procédé selon l'une des revendications 1 à 5, dans lequel les fibres de verre grossièrement hachées possèdent une humidité résiduelle de < 5 % (m/m), de préférence de < 2,5 % (m/m).

7. Procédé selon l'une des revendications 1 à 6, dans lequel dans l'étape b) les fibres de verre finement hachées sont obtenues avec une longueur de < 2 mm, de préférence de < 1 mm.

8. Procédé selon l'une des revendications 1 à 7, dans lequel le mélange de fibres de verre finement hachées et d'additif est soumis à un triage.

9. Procédé selon l'une des revendications 1 à 8, dans lequel le ratio des fibres de verre par rapport à l'additif vaut de 30/70 à 80/20 % (m/m), de préférence de 40/60 à 70/30 % (m/m), plus particulièrement de 40/60 à 60/40 % (m/m) ou de 45/55 à 55/45 % (m/m).

10. Procédé selon l'une des revendications 1 à 9, dans lequel des additifs avec une valeur D50 dans un intervalle de 0,1 à 1,5 mm, de préférence de 0,3 à 1,0 mm, sont utilisés.

11. Utilisation d'un additif sélectionné parmi le groupe formé par le sable quartzeux, le calcaire, la chaux calcinée, la dolomite, la dolomite calcinée, le laitier de haut-fourneau, Al₂O₃, l'hydroxyde d'aluminium, le feldspath sodique, le feldspath potassique, le feldspath calcique, l'acide borique, les oxydes de bore, les borates alcalins et alcalinoterreux, et les mélanges de ceux-ci comme agent d'addition pour le hachage fin des fibres de verre, dans un ratio des fibres de verre par rapport à l'additif de 25/75 à 95/05 % (m/m), de préférence de 30/70 à 80/20 % (m/m).

12. Mélange contenant des fibres de verre obtenu selon un procédé d'après l'une des revendications 1 à 10, dans lequel le ratio des fibres de verre par rapport à l'additif est compris entre 25/75 et 70/30.

13. Mélange contenant des fibres de verre selon la revendication 12, comprenant :
- des fibres de verre finement broyées avec une longueur de < 2 mm,
- de l'additif avec une valeur D₅₀ dans un intervalle de 5,0 µm à 5,0 mm ;
dans lequel l'additif est sélectionné parmi le groupe formé par le sable quartzeux, le calcaire, la chaux calcinée, la dolomite, la dolomite calcinée, le laitier de haut-fourneau, Al₂O₃, l'hydroxyde d'aluminium, le feldspath sodique, le feldspath potassique, le feldspath calcique, l'acide borique, les oxydes de bore, les borates alcalins et alcalinoterreux, et les mélanges de ceux-ci.

14. Mélange contenant des fibres de verre selon la revendication 13, dans lequel l'additif possède une valeur D₅₀ de 5,0 µm à 2 mm.

15. Utilisation d'un mélange contenant des fibres de verre obtenu selon un procédé d'après l'une des revendications 1 à 10 pour la fabrication de fibres de verre.
